Europäisches Patentamt

(19) European Patent Office

Office européen des brevets

(11) Numéro de publication: **0 072 261**
**B1**

(12) **FASCICULE DE BREVET EUROPEEN**

(45) Date de publication du fascicule du brevet: **20.11.86**

(21) Numéro de dépôt: **82400861.9**

(22) Date de dépôt: **10.05.82**

(51) Int. Cl.⁴: **B 64 D 1/02,** B 64 D 1/16,
F 41 F 5/02, F 41 H 11/00

(54) Dispositif lance-leurres électromagnétiques, notamment pour aéronef.

(30) Priorité: **03.06.81 FR 8110977**

(43) Date de publication de la demande:
**16.02.83 Bulletin 83/07**

(45) Mention de la délivrance du brevet:
**20.11.86 Bulletin 86/47**

(84) Etats contractants désignés:
**AT BE CH DE FR GB IT LI LU NL SE**

(56) Documents cités:
**FR-A-2 172 519**
**US-A-2 859 896**
**US-A-3 430 533**
**US-A-3 808 940**
**US-A-4 129 078**

**REVUE INTERNATIONALE DE DEFENSE. 1976,
série spéciale: Avions de Combet, pages
192-194, "Equipements de guerre électronique
montés sur avions"**

(73) Titulaire: **ETIENNE LACROIX - TOUS ARTIFICES
SA**
**Route de Toulouse**
**F-31600 Muret (FR)**

(72) Inventeur: **Billard, Alain André Aristide
65, avenue Saint Germier
F-31600 Muret (FR)**
Inventeur: **Santalucia, André Robert Gino
Route de Saint Lys
F-31490 Leguevin (FR)**

(74) Mandataire: **Martin, Jean-Jacques et al
Cabinet REGIMBEAU 26, Avenue Kléber
F-75116 Paris (FR)**

EP 0 072 261 B1

Courier Press, Leamington Spa, England.

## Description

La présente invention concerne la mise en oeuvre des leurres électromagnétiques; elle vise plus particulièrement la protection des avions contre les missiles à guidage radar, ou "auto-directeurs radar", et contre les conduites de tir à guidage radar.

Pour obtenir une protection radar efficace, il est nécessaire de prendre en compte les trois critères suivants:

— rapidité d'expansion du nuage de leurres,

— niveau de surface équivalente radar obtenue,

— durée d'éjection des leurres élémentaires (une cartouche par exemple).

Les auto-directeurs de missiles se perfectionnent: leur "cellule de résolution" devient de plus en plus petite; leur système de poursuite de l'avion-objectif est de plus en plus insensible au saut de vitesse apparente ou d'accélération créé du fait de l'éjection de leurres par l'avion; enfin, le système de poursuite peut dans certaines conditions anticiper et prédire pendant quelques instants la trajectoire de l'avion, en "omettant" les leurres électromagnétiques.

Il est alors souhaitable de rendre la mise en oeuvre de leurres électromagnétiques aussi efficace que possible, par rapport à la trajectoire de l'avion; la demanderesse a observé qu'il faut une montée progressive lente du niveau de surface équivalente radar (afin d'être la plus efficace possible au niveau de la poursuite en vitesse de l'auto-directeur), accompagnée d'une fin brutale destinée à favoriser l'arrachement de la poursuite.

Le problème est que la forme du nuage naturellement obtenu avec une cartouche lance-leurres électromagnétiques classique est inverse de celle souhaitable.

La présente invention vient apporter une solution beaucoup plus satisfaisante.

A cet effet, la présente invention propose une dispositif lance-leurres électromagnétiques, du type comportant un alvéole d'éjection présentant une paroi et un orifice d'éjection, des leurres logés dans l'alvéole d'éjection, une organe logé dans l'alvéole d'éjection et susceptible de se déplacer dans celui-ci suivant une direction traversant l'orifice d'éjection en vue d'une éjection des leurres hors de l'alvéole d'éjection, une charge pyrotechnique d'éjection coopérant avec ledit organe, et des moyens pour allumer sur commande la charge d'éjection.

Un tel type de dispositif lance-leurres est décrit par US—A—3 430 533 qui enseigne le positionnement, à l'intérieur de l'alvéole d'éjection, d'un piston coulissant qui constitue ledit organe et dont la fonction est de pousser les leurres hors de l'alvéole lorsqu'une charge pyrotechnique d'éjection est allumée.

Plus précisément, US—A—3 430 533 propose d'interposer les leurres entre le piston précité et un capuchon de fermeture de l'alvéole, lequel capuchon est encliqueté sur la totalité de sa périphérie derrière un épaulement du tube d'éjection délimitant l'alvéole; la rupture de cet encliquetage, à l'éjection, nécessite nécessairement que l'on applique au capuchon un effort dépassant un seuil prédéterminé, et cet effort résultant du déplacement du piston vers l'orifice d'éjection sous l'effet de la charge pyrotechnique d'éjection s'applique au capuchon par l'intermédiaire des leurres; ceux-ci subissent nécessairement une compression plus ou moins importante jusqu'à ce que le seuil d'effort nécessaire à la rupture de l'encliquetage soit atteint, avec pour conséquence une détente brutale et incontrôlable des leurres dès que l'encliquetage est rompu, c'est-à-dire dès que le capuchon libère l'orifice d'éjection; le franchissement d'une "seuil d'effort" pour provoquer la rupture de l'encliquetage nécessite également la prévision d'une charge d'éjection puissante.

En égard à ce dispositif connu, le dispositif lance-leurres électromagnétiques conforme à la présente invention est caractérisé en ce que ledit organe est un tiroir porte-leurres présentant, de même que l'alvéole d'éjection, une section transversale rectangulaire, ledit tiroir porte-leurres présentant un bout du côté de l'orifice d'éjection et un grand côté sur lequel il est ouvert, les leurres étant logés dans le tiroir porte-leurres transversalement par rapport à la direction d'éjection et selon le grand côté de ladite section, et en ce qu'il est prévu un organe de retenue agissant entre le tiroir porte-leurres et l'alvéole d'éjection, ledit organe de retenue étant muni de griffes de retenue amovible en forme de V dont la pointe est tournée vers l'intérieur de l'alvéole d'éjection et qui établissent un agrippement sur la paroi de ce dernier, les griffes en V elles-mêmes étant sollicitées par le tiroir porte-leurres dans le sens d'un disparition dudit agrippement du fait d'un mouvement de translation du tiroir porte-leurres vers l'orifice d'éjection sous l'effet de la charge d'éjection de façon à autoriser une sortie lente du tiroir porte-leurres.

Certes, on a déjà proposé, dans US—A—2 859 896, de placer des boîtes de leurres dans des alvéoles de section rectangulaire, et de lancer les leurres en éjectant ces boîtes hors des alvéoles, si bien que ces boîtes peuvent être comparées dans une certaine mesure à des tiroirs lance-leurres; toutefois, US—A—2 859 896 ne révèle aucune autre analogie entre ces boîtes et les tiroirs lance-leurres préconisés par la présente invention, quant à leur forme ou quant à leur coopération avec le dispositif lance-leurres proprement dit; une telle analogie n'aurait d'ailleurs pas de rai.on d'être, puisque les moyens mécaniques, et non pyrotechniques, d'éjection proposés par US—A—2 859 896 se caractérisent par une lenteur d'action sur les boîtes de leurres, ne nécessitant aucune disposition complémentaire propre à ralentir l'éjection; incidemment, on remarque que cette lenteur et le caractère successif des éjections respectives des différentes boîtes de leurres dans le cas du dispositif décrit par US—A—2 859 896 limitent les possibilités d'application d'un tel dispositif.

Le dispositif lance-leurres électromagnétiques proposé est quant à lui du type comportant un alvéole d'éjection, un tiroir porte-leurres ouvert logé dans l'alvéole d'éjection, et équipé d'une charge pyrotechnique d'éjection, et des moyens, incorporés à l'alvéole, pour allumer sur commande la charge d'éjection, tandis qu'un bouchon éventuel referme l'orifice d'éjection de l'alvéole.

Selon un premier aspect de l'invention, il est prévu, à côté du bouchon éventuel, et à l'intérieur de l'alvéole, un organe de retenue à effet unidirectionnel, qui s'agrippe sur la paroi de l'alvéole, l'agrippement ne disparaissant que sous la poussée du corps porte-leurres lors de l'éjection, ce qui permet une sortie lente du tiroir porte-leurres, tout en assurant par ailleurs, avant mise en oeuvre des leurres, une excellente tenue aux contraintes mécaniques telles que celles existant à bord d'un avion, sans nécessiter l'emploi de charges pyrotechniques plus importantes pour la rupture de la retenue, ce qui conduit fatalement à des vitesses plus importantes.

L'organe de retenue est muni en bordure de griffes en V dont la pointe est orientée vers l'intérieur de l'alvéole lance-leurres. Ces griffes peuvent être continues, ou presque continues.

On résoud ainsi le problème de mise en oeuvre des leurres à proximité immédiate de l'avion, sans rencontrer les difficultés inhérentes à l'usage de charges pyrotechniques lentes. Le "recul instantané" lors de l'éjection est également notablement réduit, ce recul induisant des inconvénients tels qu'un tassement de la charge de leurres, générateur d'enchevêtrements préjudiciables à leur bon déploiement.

Selon une autre aspect de l'invention, le tiroir porte-leurres et l'alvéole d'éjection sont de section droite rectangulaire, où les leurres sont logés en travers selon le grand côté de la section droite. Ceci permet notamment une coupe plus facile des leurres (paillettes métallisées ou dans certains cas rubans) pour couvrir plusieurs bandes de longueurs d'ondes, ajustables au choix selon la fréquence radar émise par le missile.

Un autre aspect du problème est d'augmenter notablement la rapidité de dispersion des paillettes, pour qu'elles se trouvent réparties dans le voisinage immédiat de l'avion.

Selon un autre aspect de l'invention, le tiroir porte-leurres est ouvert sur un grand côté et, éventuellement, sur son bout côté bouchon, l'autre grand côté pouvant être muni d'orifices calibrés, ce qui permet une mise en oeuvre à faible vitesse transversale des leurres; à cause des turbulences de l'air liées à la sortie du tiroir, turbulences qui suivent l'avion, les leurres vont également tendre à suivre celui-ci.

Très avantageusement, le dispositif lance-leurres comporte plusieurs alvéoles d'éjection enfermant plusieurs charges de leurres respectives, et les moyens d'allumage des charges d'éjection agissent séquentiellement, avec des retards échelonnés, sur les différentes charges de leurres.

Dans un mode de réalisation, quatre charges sont excitables séquentiellement sur commande unique.

En pratique, les retards entre charges sont de l'ordre du temps de déploiement des leurres d'une charge élémentaire.

De préférence, les retards entre charges vont en diminuant de la première éjectée à la dernière.

Pour l'application aux avions, les différents alvéoles d'éjection sont incorporés en travers dans un module lance-leurres allongé, de sorte que le grand fond des tiroirs soit éjecté du côté de l'avant de l'avion.

Dans un mode de réalisation préférentiel, le module lance-leurres comprend une paroi de fond plane, munie d'organes de prise mâles susceptibles de coopérer avec des organes de prise femelles d'une règle-support fixée sur l'aéronef, avec mise en prise d'un connecteur entre le module et la règle-support. Chaque série d'alvéoles d'éjection est interconnectée par une suite de retards pyrotechniques disposés axialement dans le module, au voisinage de sa paroi de fond, et commandée par un initiateur électrique respectif relié au connecteur.

D'autres caractéristiques et avantages de l'invention apparaîtront à la lecture de la description détaillée qui va suivre, faite en référence aux dessins annexés, donnés pour illustrer à titre non limitatif un mode de réalisation préférentiel de l'invention, et sur lesquels:

— la figure 1 illustre sous forme d'une vue en coupe une règle-support destinée à être fixée sur un avion pour recevoir un module de lance-leurres électromagnétiques selon le mode de réalisation préférentiel de l'invention;

— la figure 2 est une vue en coupe du mode de réalisation préférentiel de module lance-leurres électromagnétiques;

— la figure 3 est une vue de dessus de module de la figure 2, et porte la ligne de coupe A—A suivant laquelle est effectuée la coupe de la figure 2;

— la figure 4 est une vue agrandie de la partie de gauche de la figure 2;

— la figure 5 est une vue en coupe suivant la ligne de coupe B—B des figures 2 et 4;

— la figure 6 est une vue en perspective illustrant le tiroir incorporé à un élément lance-leurres selon l'invention; et

— la figure 7 est une vue de face du même tiroir.

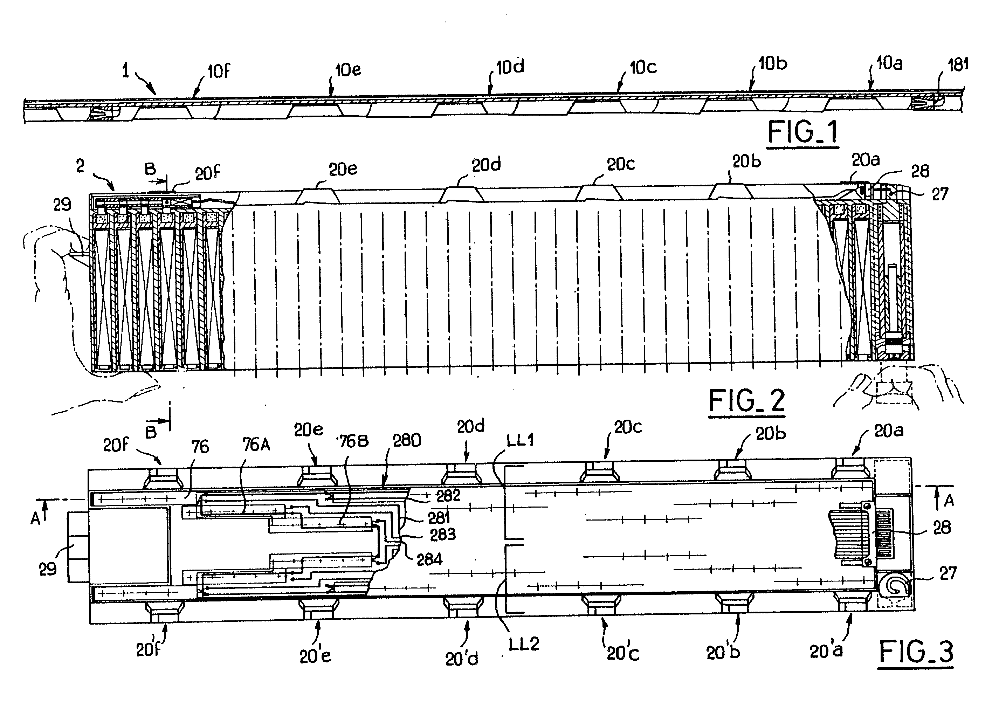

Sur la figure 1, la règle-support incorporée à l'avion est désignée par la référence numérique 1; elle comporte des organes de prise femelles identifiés 10a à 10f. D'autres détails sur ces organes de prise apparaîtront dans FR—A—2 507 150 déposée le 3 juin 1981, au nom de la demanderesse, et intitulée "Dispositif de fixation pour modules embarqués, notamment pour modules lance éclairants". On remarque en 181 une arrivée de connecteur électrique provenant d'un dispositif central de commande disposé sur l'avion.

Sur la figure 2, la référence générale 2 désigne un module lanceur de leurres électromagnétiques. Sur son fond 200, généralement plan, ce module comporte des organes de prise mâles 20a à 20f, qui sont ici réalisés à la façon de queues d'aronde, de même que les organes 10a à 10f homologues de la figure 1. On reconnaît également une poignée de préhension 29, ainsi qu'un dispositif 27 capable d'assurer une translation relative entre la règle-support 1 et le module 2, afin d'assurer le verrouillage des organes mâles et femelles par leurs queues d'aronde. On voit enfin un connecteur électrique 28 incorporé au module lanceur de leurres dans sa partie supérieure, et susceptible de venir coopérer avec l'élément de connecteur 181 de la règle-support. D'autres éléments descriptifs relatifs à la structure générale de ce module pourront être retrouvés dans la demande de brevet précitée, dont le contenu est à incorporer aux présentes.

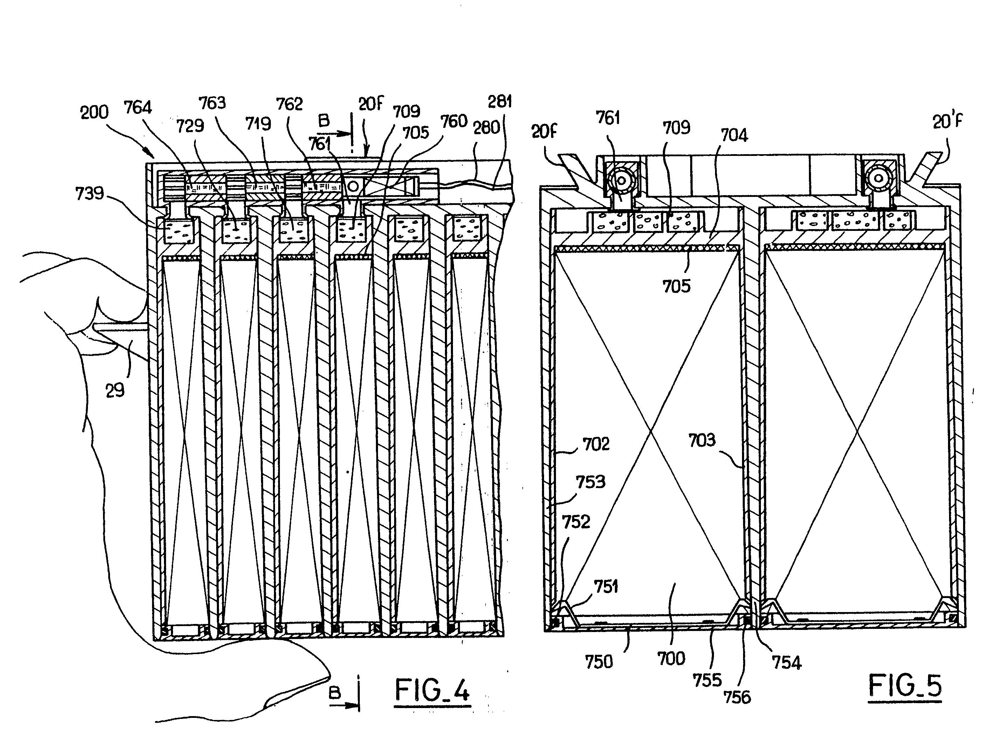

On fera maintenant référence essentiellement aux figures 2 à 7. La vue en coupe de la figure 2 fait apparaître qu'en longueur se trouvent trente six dispositifs élémentaires lanceurs de leurres, certains représentés réellement en coupe, et d'autres matérialisés par un trait d'axe vertical. Comme le montrent les traits schématiques LL1 et LL2 de la figure 3, ainsi que la vue en coupe de la figure 5, deux éléments lanceurs de leurres sont disposés côte à côte en travers à l'intérieur du module 2, qui comprend donc en tout 72 lanceurs de leurres élémentaires.

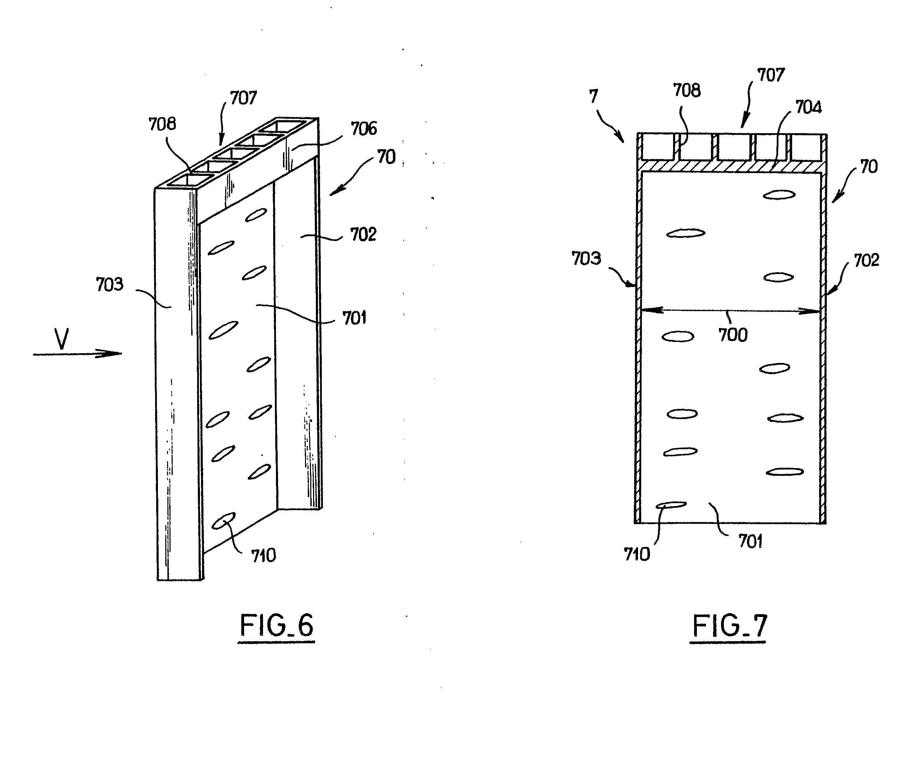

Sur les figures 5 à 7, on voit que chaque élément lanceur de leurres comporte un alvéole d'éjection, délimité par des parois du module, dont la paroi latérale 753, la paroi médiane 754, d'autres cloisons disposées transversalement dans l'autre sens, ainsi que la paroi de fond 704. A l'intérieur de l'alvéole d'éjection ainsi défini se trouve logé un corps porte-leurres ouvert 70, illustré sans les leurres sur les figures 6 et 7. Le corps porte-leurres 70 se présente comme un tiroir, muni de deux parois latérales 702 et 703, et d'un fond 701, la face opposée étant ouverte, de même que l'orifice inférieur sur la figure 6 et la figure 7. Le trait schématique 700 de la figure 7 illustre que les leurres individuels, paillettes métallisées ou bien rubans métallisés, sont disposés en travers selon le grand côté de la section droite rectangulaire définie à l'intérieur du tiroir 70. Le grand côté 701 du tiroir est muni d'orifices calibrés 710, qui permettent une mise en oeuvre des leurres en utilisant les turbulences de l'air liées à la sortie du tiroir, comme on le verra plus loin.

Bien entendu, l'alvéole d'éjection défini à l'intérieur du module lanceur 2 possède une section droite rectangulaire homologue de celle du tiroir porte-leurres, de façon à le recevoir à coulissement étroit.

Cet alvéole d'éjection est muni sur la figure 5 d'un bouchon 755, classiquement équipé d'une étanchéité périphérique 756 par joint torique. Sur ce bouchon 755 est fixé, par exemple par sertissage, un organe de retenue 750 à effet unidirectionnel, qui s'agrippe sur la paroi du tube 753, ainsi que sur la paroi 754 et les autres parois dans le sens parallèle au plan de la figure 5.

Dans le mode de réalisation représenté, l'organe de retenue 750 est défini par une partie plane, munie en bordure de griffes en forme générale de V, ces griffes étant notées 751. La pointe du V est orientée vers l'intérieur de l'alvéole lance-leurres, ce qui fait que la branche libre du V, tournée vers l'extérieur, et de préférence renforcée, va venir s'arc-bouter sur la paroi latérale du tube lanceur, afin de s'opposer violemment à toute traction vers l'extérieur de l'ensemble du tiroir à raison des vibrations et autres mouvements inhérents à l'avion, qui produiraient des composantes d'effort sur l'ensemble du corps porte-leurres. On peut réaliser de cette manière une structure qui résiste, en traction, au niveau de la plaque 750, à une accélération de l'ordre de 15 fois l'accélération de la pesanteur.

Un problème se posait selon la technique antérieure, car avec une telle force de retenue, et compte tenu des impératifs de déploiement des leurres, il aurait fallu prévoir une charge pyrotechnique d'éjection qui soit à la fois lente et puissante, ce qui est pratiquement irréalisable.

Avec la disposition selon l'invention, le tiroir porte-leurres vient par ses parois 702, 703 solliciter le bord extérieur

du V 751, de manière que l'agrippement de celui-ci sur le tube d'éjection disparaisse lorsque le tiroir est sollicité en translation d'éjection sous l'effet de la charge d'éjection 709, alors que les leurres eux-mêmes ne poussent pas encore sur le bouchon 755 et la plaque 750. Ceci permet une sortie lente du corps porte-leurres 70, avec une charge d'éjection 709 de puissance faible, de nature à réduire les effets de recul instantanés liés à la mise en oeuvre de cette charge pyrotechnique.

Du fait de cette sortie lente, les leurres ne sont animés que d'une vitesse relative faible par rapport à l'avion, dans le sens transversal. Par ailleurs, c'est le fond 701 percé d'orifices 710 qui est tourné vers l'avant de l'avion. Les leurres ne vont donc être dépotés que lentement, en raison des turbulences apparaissant derrière le fond 701 du fait de la sortie du tiroir 70. Et ces turbulences vont permettre aux leurres de rester au voisinage de l'avion, même après avoir quitté l'ensemble mécanique solidaire de celui-ci, d'où également une faible vitesse relative des leurres par rapport à l'avion dans le sens longitudinal du déplacement de celui-ci.

On remarquera également que la géométrie du tiroir porte-leurres proposé permet de mettre en oeuvre à chaque fois une quantité importante de leurres, et par conséquent une surface équivalente radar importante, qui, comme il vient d'être dit, va se développer au voisinage immédiat de l'avion, en suivant pratiquement le déplacement ce celui-ci. Comme on le voit sur la figure 4, le module lance-leurres comporte plusieurs tubes d'éjection enfermant plusieurs charges de leurres respectives. Les moyens d'allumage 761 à 764 des charges d'éjection vont agir séquentiellement, avec des retards échelonnés, sur les différentes charges de leurres.

Plus précisément, un initiateur électrique 760 est relié par des fils conducteurs 280 et 281 provenant de connecteur 28. (D'autres conducteurs 282, 283 et 284 agissent par rapport au même conducteur de masse 280, mais sur d'autres groupes de charges de leurres).

L'initiateur électrique 760 va allumer immédiatement par l'intermédiaire de transmetteur 761 la charge d'éjection 709 d'un premier leurre élémentaire, qui va se développer de la manière qui vient d'être dite. Après un retard prédéterminé, défini par le retard 762, une transmission de feu analogue va exciter la charge d'éjection 719 d'un corps de leurres élémentaires adjacent, qui est à son tour développé. Le retard est choisi en règle générale de l'ordre du temps de déploiement des leurres d'une charge élémentaire, de façon que la seconde charge de leurres soit mise en oeuvre peu après le moment où la première charge de leurres est déployée, afin de venir renforcer l'action de celle-ci, comme on le verra plus loin.

Ensuite, un second retard pyrotechnique 763 va actionner une troisième charge d'éjection 729, qui va produire à son tour le développement d'un nouveau corps de leurres élémentaires. Enfin, un dernier retard pyrotechnique 764 va exciter la quatrième charge d'éjection 739, qui produit la sortie d'un quatrième corps de leurres élémentaires.

On voit donc que dans ce mode de réalisation, quatre charges élémentaires de leurres sont excitables séquentiellement sur commande unique, agissant sur un seul initiateur électrique.

Dans l'application préférentielle, les valeurs des retards définies par les relais 761 à 764 entre les différentes charges vont en diminuant de la première charge éjectée à la dernière. Sur la figure 4, on note par ailleurs que la suite des moyens d'excitation constitués par l'initiateur 760 et les retards 762 à 764 est disposée axialement, le long de la grande dimension du module lanceur de leurres 2. Sur la figure 3, cet ensemble 760 à 764 est matérialisé par le rectangle 76. Cette figure fait également apparaître que sont disposés axialement d'autres moyens d'excitation pyrotechniques tels que 76A, associés à un groupe de quatre leurres élémentaires implantés en position axialement adjacente aux quatre premiers. La figure 3 fait également apparaître la disposition "en escalier" de trois dispositifs d'allumage 76, 76A et 76B associés respectivement à trois groupes de quatre leurres élémentaires. Les escaliers s'imbriquent entre eux, en laissant passer les connexions électriques vers le connecteur 28, et la disposition d'ensemble est symétrique autour de l'axe longitudinal du module lanceur de leurres 2. Bien entendu, les points de coopération entre chacun de ces dispositifs d'excitation incorporés au module lanceur et les charges d'éjection respectivement associées vont se trouver décalés suivant la position de la charge élémentaire de leurres concernée le long de l'axe du module lanceur.

A cet égard, on remarquera sur la figure 6 et la figure 7 que la partie supérieure du tiroir 70 est munie d'un alvéole rectangulaire 707, délimité, en plus des autres parois du tiroir, par un élément de paroi avant 706. Dans cet alvéole sont prévues des cloisons intermédiaires, telles 708, qui délimitent les différents volumes possibles pour la charge d'éjection, en rapport avec les différentes vitesses d'éjection retenues.

Les avantages de la présente invention apparaissent en comparant les résultats qu'elle procure à ceux des cartouches lance-leurres classiques.

On se rappellera que les cartouches lance-leurres classiques produisent un déploiement important de leurres localisé dans une zone de faibles dimensions (dizaine de mètres), suivi d'une dispersion progressive lente peu propice à la séduction d'autant plus que la forme de la signature radar est décroissante lorsqu'on s'éloigne de l'avion (surface équivalente radar plus faible côté avion).

Dès la sortie du tiroir, et en raison des turbulences qu'elle fait naître, une dispersion largement étalée dans l'espace (plusieurs centaines de mètres) associée à une forme de nuage adaptée à la séduction produit une montée progressive lente du niveau de surface équivalente radar, accompagnée d'une fin brutale qui favorise l'arrachement de la poursuite. Cette forme est obtenue par tir en séquence de plusieurs charges pour lesquelles les vitesses d'éjection sont de plus en plus élevées (les premières vitesses d'éjection s'exprimant en mètres par seconde, les dernières en dizaines de mètres par seconde). De tels tirs peuvent faire intervenir plusieurs séries de quatre corps de leurres, éjectés de façon intercalée.

**Revendications**

1. Dispositif lance-leurres électromagnétiques, du type comportant un alvéole d'éjection (753) présentant une paroi et un orifice d'éjection, des leurres logés dans l'alvéole d'éjection (753), un organe (70) logé dans l'alvéole d'éjection (753) et susceptible de se déplacer dans celui-ci suivant une direction traversant l'orifice d'éjection en vue d'une éjection des leurres hors de l'alvéole d'éjection (753), une charge pyrotechnique d'éjection (709) coopérant avec ledit organe (70), et des moyens (760, 764) pour allumer sur commande la charge d'éjection (709), caractérisé en ce que ledit organe (70) est un tiroir porte-leurres (70) présentant, de même que l'alvéole d'éjection (753), une section transversale rectangulaire, ledit tiroir porte-leurres (70) présentant un bout du côté de l'orifice d'éjection et un grand côté sur lequel il est ouvert, les leurres étant logés dans le tiroir porte-leurres (70) transversalement par rapport à la direction d'éjection et selon le grand côté de ladite section, et en ce qu'il est prévu un organe de retenue (750) agissant entre le tiroir porte-leurres (70) et l'alvéole d'éjection (753), ledit organe de retenue (750) étant muni de griffes (751) de retenue amovible en forme de V dont la pointe est tournée vers l'intérieur de l'alvéole d'éjection (753) et qui établissent un agrippement sur la paroi de ce dernier, les griffes en V (751) elles-mêmes étant sollicitées par le tiroir porte-leurres (70) dans le sens d'une disparition dudit agrippement du fait d'un mouvement de translation du tiroir porte-leurres (70) vers l'orifice d'éjection sous l'effet de la charge d'éjection (709) de façon à autoriser une sortie lente du tiroir porte-leurres (70).

2. Dispositif lance-leurres selon la revendication 1, caractérisé en ce que l'organe de retenue (750) est fixé à une bouchon amovible (755) de fermeture de l'alvéole, dans l'alvéole d'éjection (753).

3. Dispositif lance-leurres selon l'une quelconque des revendications 1 et 2, caractérisé en ce que le tiroir porte-leurres (70) est ouvert sur son bout côté de l'orifice d'éjection.

4. Dispositif lance-leurres selon l'une quelconque des revendications 1 à 3, caractérisé en ce que l'autre grand côté (701) du tiroir porte-leurres (70) est muni d'orifices calibrés (710).

5. Dispositif lance-leurres selon l'une quelconque des revendications 1 à 4, caractérisé en ce que le tiroir porte-leurres (70) comporte ladite charge pyrotechnique d'éjection (709).

6. Dispositif lance-leurres selon l'une quelconque des revendications 1 à 5, caractérisé par le fait qu'il comporte plusieurs alvéoles d'éjection enfermant plusieurs charges de leurres respectives, et que les moyens d'allumage (761 à 764) des charges d'éjection agissent séquentiellement, avec des retards échelonnés, sur les différentes charges de leurres.

7. Dispositif lance-leurres selon la revendication 6, caractérisé par le fait que quatre charges sont excitables séquentiellement sur commande unique.

8. Dispositif lance-leurres selon l'une quelconque des revendications 6 et 7, caractérisé par le fait que les retards (761 à 764) entre charges sont de l'ordre du temps de déploiement des leurres d'une charge élémentaire.

9. Dispositif lance-leurres selon l'une quelconque des revendications 6 à 8, caractérisé par le fait que les retards (761 à 764) entre charges vont en diminuant de la première éjectée à la dernière.

10. Dispositif lance-leurres selon l'une quelconque des revendications 6 à 9, caractérisé par le fait que les différents alvéoles d'éjection sont incorporés en travers dans un module lance-leurres allongé (2), de sorte que le grand fond des tiroirs soit éjecté du côté de l'avant de l'avion.

11. Dispositif lance-leurres selon la revendication 10, caractérisé par le fait que le module lance-leurres (2) comprend une paroi de fond généralement plane (200) munie d'organes de prise mâles (20) susceptibles de coopérer avec des organes de prise femelles (10) d'une règle-support (1) fixée sur l'avion, avec mise en prise d'un connecteur (181, 28) entre le module et la règle-support, et que chaque série d'alvéoles d'éjection est reliée à une suite de retards pyrotechniques (761 à 764) disposés axialement dans le module, au voisinage de sa paroi de fond, et commandée par un initiateur électrique respectif (760) relié au connecteur (78).

**Patentansprüche**

1. Vorrichtung zum Verteilen elektromagnetischer Düppel, mit einer Auswurfkammer (753), die eine Wand und eine Auswurföffnung aufweist, wobei die Düppel in der Auswurfkammer (753) angeordnet sind, mit einer in der Auswurfkammer (753) angeordneten Einrichtung (70), welche in dieser entlang einer die Auswurföffnung im Hinblick auf das Auswerfen der Düppel aus der Auswurfzelle (753) kreuzenden Richtung verschiebbar angeordnet ist, mit einer mit dieser Einrichtung (70) zusammenwirkenden pyrotechnischen Ladung zum Auswerfen (709) und mit Mitteln (760, 764) zum willkürlichen Zünden der Ladung zum Auswerfen (709), dadurch gekennzeichnet, daß die Einrichtung (70) ein Führungsschieber (70) für die Düppel ist, de ebenso wie die Auswurfkammer (753) einen rechteckigen Querschnitt aufweist, wobei der Führungsschieber (70) für die Düppel eine Stirnseite zur Auswurföffnung und eine große offene Seitenfläche aufweist und die Düppel im Führungsschieber für die Düppel (70) quer zur Auswurfrichtung und entlang der großen Seitenfläche des Querschnittes angeordnet sind, und daß eine Rückhaltevorrichtung (750) vorgesehen ist, die zwischen dem Führungsschieber für die Düppel (70) und der Auswurfkammer (753) wirksam wird, wobei diese Rückhaltevorrichtung (750) mit verstellbaren V-förmigen Rückhalteklauen (751) ausgebildet ist, deren Spitze in das Innere der Auswurfkammer (753) ragt und die ein Festklemmen an der Wand derselben bewirkt, wobei die V-förmigen Klauen (751) selbst durch den Führungsschieber für die Düppel (70) im Sinne einer Verringerung der Klemmwirkung derart beaufschlagt werden, daß bei einer Translationsbewegung des Führungsschiebers für die Düppel (70) zur Auswurföffnung unter Einwirkung der Ladung zum Auswerfen (709) ein langsames Austreten des Führungsschiebers (70) für die Düppel ermöglicht wird.

2. Vorrichtung zum Verteilen von Düppeln nach Anspruch 1, dadurch gekennzeichnet, daß die Rückhaltevorrichtung (750) an einem abnehmbaren Verschlußstück (755) in der Auswurfkammer (753) festgelegt ist.

3. Vorrichtung zum Verteilen von Düppeln nach Anspruch 1 oder 2, dadurch gekennzeichnet, daß der Führungsschieber für die Düppel (70) an seiner Stirnseite zur Auswurföffnung offen ausgebildet ist.

4. Vorrichtung zum Verteilen von Düppeln nach einem der Ansprüche 1 bis 3, dadurch gekennzeichnet, daß die andere Seitenfläche (701) des Führungsschiebers für die Düppel (70) mit kalibrierten Öffnungen (710) ausgebildet ist.

5. Vorrichtung zum Verteilen von Düppeln nach einem der Ansprüche 1 bis 4, dadurch gekennzeichnet, daß der Führungsschieber für die Düppel (70) die pyrotechnische Ladung zum Auswerfen (709) aufweist.

6. Vorrichtung zum Verteilen von Düppeln nach einem der Ansprüche 1 bis 5, dadurch gekennzeichnet, daß sie mehrere Auswurfkammern mit mehreren dazugehörigen Ladungen umfaßt und daß die Mittel zum Zünden (761 bis 764) der Ladungen zum Auswerfen sequentiell mit gestaffelten Verzögerungen die verschiedenen Ladungen für die Düppel auslösen.

7. Vorrichtung zum Verteilen von Düppeln nach Anspruch 6, dadurch gekennzeichnet, daß vier Ladungen sequentiell mit einer einzigen Ansteuerung ausgelöst werden.

8. Vorrichtung zum Verteilen von Düppeln nach Anspruch 6 oder 7, dadurch gekennzeichnet, daß die Verzögerungen (761 bis 764) zwischen den Ladungen im Bereich der Zeitdauer der Ausbreitung der Düppel einer Elementarladung sind.

9. Vorrichtung zum Verteilen von Düppeln nach einem der Ansprüche 6 bis 8, dadurch gekennzeichnet, daß die Verzögerungen (761 bis 764) zwischen den Ladungen sich von der ersten ausgeworfenen Ladung zur letzten verringern.

10. Vorrichtung zum Verteilen von Düppeln nach einem der Ansprüche 6 bis 9, dadurch gekennzeichnet, daß verschiedene Auswurfkammern quer in einem länglichen Modul (2) zum Verteilen von Düppeln derart eingebaut sind, daß die Breitseite der Führungsschieber in Richtung zur Vorderseite des Flugzeuges ausgeworfen werden.

11. Vorrichtung zum Verteilen von Düppeln nach Anspruch 10, dadurch gekennzeichnet, daß das Modul zum Verteilen der Düppel (2) eine im allgemeinen plane Bodenwand aufweist, die mit Greifvorrichtungen (20) ausgestattet ist, die mit Gegenstücken (10) eines am Flugzeug angeordneten Trägers (1) unter Zwischenschaltung eines Steckers (181, 28) zwischen dem Modul und dem Träger zusammenwirken können, und daß jede Serie von Auswurfkammern mit einer Folge von pyrotechnischen Verzögerern (761 bis 764) verbunden ist, welche axial im Modul in der Nähe der Bodenwand angeordnet sind und durch einen mit dem Stecker (78) verbundenen jeweiligen elektrischen Zünder (760) gesteuert werden.

## Claims

1. An electromagnetic chaff projector device of the type including an ejection cell (753) exhibiting a wall and an ejection orifice, chaff housed in the ejection cell (753), a device (70) housed in the ejection cell (753) and capable of moving within the latter following a direction which crosses the ejection orifice for the purpose of ejecting the chaff outside the ejection cell (753), a pyrotechnic ejection load (709) co-operating with the said device (70), and devices (760, 764) for the lighting up, by control, of the ejection load (709), characterised in that the said device (70) is a chaff-bearing drawer (70) exhibiting, as does the ejection cell (753), a rectangular transverse section, the said chaff-bearing drawer (70) exhibiting one end on the side of the ejection orifice and a large side on which it is open, the chaff being housed in the chaff-bearing drawer (70) transversely in relation to the direction of ejection and according to the large side of the said section, and in that a retention device (750) is provided which acts between the chaff-bearing drawer (70) and the ejection cell (753), the said retention device (750) being equipped with V-shaped movable retention claws (751), the tip of which is turned towards the inside of the ejection cell (753) and which establish a grip on the wall of the latter, the V-shaped claws (751) themselves being stressed by the chaff-bearing drawer (70) in the direction of the disappearance of the said grip by virtue of a movement of displacement of the chaff-bearing drawer (70) towards the ejection orifice under the effect of the ejection load (709) in such a way as to allow the chaff-bearing drawer (70) to come out slowly.

2. A chaff projector device according to claim 1, characterised in that the retention device (750) is fixed to a movable plug (755) for the closing of the cell, in the ejection cell (753).

3. A chaff projector device according to one of claims 1 and 2, characterised in that the chaff-bearing drawer (70) is open on its end which is on the side of the ejection orifice.

4. A chaff projector device according to one of claims 1 to 3, characterised in that the other large side (701) of the chaff-bearing drawer (70) is equipped with graded orifices (710).

5. A chaff projector device according to one of claims 1 to 4, characterised in that the chaff-bearing drawer (70) includes the said pyrotechnic ejection load (709).

6. A chaff projector device according to one of claims 1 to 5, characterised in that it includes several ejection cells enclosing several respective chaff loads, and in that the lighting devices (761 to 764) of the ejection loads act in sequence, with staggered delays, on the different loads of chaff.

7. A chaff projector device according to claim 6, characterised in that four loads can be started up in sequence with a single control.

8. A chaff projector device according to one of claims 6 and 7, characterised in that the delays (761 to 764) between loads are of the order of the time of dissemination of the chaff of one elementary load.

9. A chaff projector device according to one of claims 6 to 8, characterised in that the delays (761 to 764) between loads diminish from the first ejected load to the last.

10. A chaff projector device according to one of claims 6 to 9, characterised in that the different ejection cells are incorporated transversely, in an extended chaff projector module (2), with the result that the large bottom of the drawers is ejected from the side of the front of the aeroplane.

11. A chaff projector device according to claim 10 characterised in that the chaff projector module (2) includes a bottom wall which is generally two-dimensional (200) equipped with male holding devices (20) which are capable of co-operating with female holding devices (10) of a carrier guide-bar (1) which is attached to the aeroplane, with the engagement of a connector (181, 28) between the module and the carrier guide-bar, and in that each series of ejection cells is connected to a series of pyrotechnic delays (761 to 764) arranged axially in the module, in the vicinity of its bottom wall, and controlled by a respective electric initiator (760) connected with the connector (78).

FIG_1

FIG_2

FIG_3

0 072 261

FIG_5

FIG_4

FIG_6

FIG_7